# FASCICULE DE BREVET EUROPEEN

(11) **EP 3 333 039 B1**
(45) Date de publication et mention de la délivrance du brevet: **31.03.2021**
(21) Numéro de dépôt: 17205569.1
(22) Date de dépôt: 05.12.2017
(51) Int. Cl.: B61B 12/00, B61B 12/06

(54) **PROCÉDÉ ET INSTALLATION DE TRANSPORT DE VÉHICULES TRACTÉS PAR UN CÂBLE**
VERFAHREN UND ANLAGE FÜR DEN TRANSPORT MIT SEILBAHNEN
METHOD AND INSTALLATION FOR TRANSPORTING BY CABLE CAR

(30) Priorité: 12.12.2016 FR 1662298
(43) Date de publication de la demande: 13.06.2018
(73) Titulaire: POMA, 38340 Voreppe (FR)
(72) Inventeur: Vichier Guerre, Jean-Pierre, 38500 Voiron (FR)
(74) Mandataire: Talbot, Alexandre

(56) Documents cités:
- EP-A1- 3 009 993
- WO-A1-2012/172198
- JP-A- 2007 326 442
- US-A1- 2012 103 225

## Description

### Domaine technique de l'invention

L'invention concerne le transport de véhicules tractés par un câble, et plus particulièrement le transport par câble tracteur aérien.

### État de la technique

Les installations de transport de personnes par câble tracteur aérien, telles que les téléphériques, les télécabines ou les télésièges, sont sûres et offrent un transport confortable aux usagers. Cependant, des pannes peuvent survenir, de manière exceptionnelles, lorsque les passagers sont présents dans les véhicules. Dans des rares cas, il est également possible de ne pas pouvoir redémarrer l'installation et les passagers bloqués restent suspendus au-dessus du sol jusqu'à l'intervention du personnel compétent pour les évacuer. L'intervention consiste alors en une évacuation verticale par hélicoptère ou en rappel.

Actuellement, il n'est pas possible de connaître avec précision quelles personnes se trouvent dans quel véhicule, et combien y a-t-il de passagers dans chacun des véhicules. En effet, des enfants ou des personnes à mobilité réduite peuvent embarquer dans les véhicules, et si l'installation ne peut pas redémarrer, il faut adapter les moyens d'évacuation en fonction des personnes à évacuer. En outre, les moyens d'évacuation doivent également être adaptés en fonction du nombre de personnes présentes dans les véhicules à évacuer.

Il existe des dispositifs de sécurité pour contrôler l'embarquement de personnes sur des télésièges. On peut citer par exemple la demande internationale WO2013/182803 qui divulgue un dispositif de sécurité d'un siège de télésiège, comprenant une caméra tridimensionnelle pour détecter la présence d'au moins un passager sur le siège. Mais ce dispositif ne permet pas de connaître l'état de la voie de circulation des véhicules, c'est-à-dire où se trouvent les passagers, et combien y a-t-il de passagers qui ont embarqués dans les véhicules. Ce dispositif est en outre spécifique aux télésièges, et n'est pas adapté aux télécabines et téléphériques.

La demande de brevet européen EP3009993 divulgue une télécabine, comprenant un système de contrôle pour déterminer le nombre de personnes présentes à des portes d'accès d'une zone d'embarquement. En outre, la demande de brevet japonais JP2007326442 divulgue une télécabine comprenant un capteur à infrarouge situé à l'intérieur d'une enceinte d'un véhicule pour transmettre un signal ON/OFF de présence/absence d'un passager dans l'enceinte du véhicule.

Il est donc intéressant de fournir des moyens pour connaître la répartition des passagers sur la voie de circulation des véhicules afin d'optimiser les moyens d'évacuation en cas de pannes.

### Objet de l'invention

Un objet de l'invention consiste à pallier ces inconvénients, et plus particulièrement à fournir des moyens pour faire des choix adaptés à une situation d'évacuation de la voie de circulation d'une installation de transport par câble.

Selon un aspect de l'invention, il est proposé un procédé de transport de véhicules tractés par un câble, comprenant une étape initiale dans laquelle on génère une image représentative d'une enceinte d'un véhicule.

Le procédé comporte, en outre, les étapes suivantes :
- récupérer un identifiant du véhicule, et
- enregistrer, dans une mémoire non volatile, l'identifiant et l'image représentative associée à l'identifiant.

Ainsi on peut caractériser le contenu d'un véhicule en récupérant l'identifiant du véhicule et une image représentative du contenu du véhicule qui lui est associée.

Le câble peut définir une voie de circulation des véhicules reliant deux gares et le procédé comprend une étape d'identification d'une position du véhicule le long de la voie de circulation.

Grâce à la connaissance de la position des véhicules le long de la voie de circulation, et du contenu des véhicules, on peut décider, si c'est possible, de redémarrer l'installation pour rapprocher un véhicule contenant plusieurs passagers d'un pylône de la voie pour faciliter l'évacuation de ces passagers. Un tel procédé facilite l'évacuation des passagers car il offre la possibilité de sélectionner les véhicules qui doivent être évacués en priorité, en fonction de leurs positions vis-à-vis de la nature du terrain, et du taux de remplissage des véhicules.

On peut identifier la position du véhicule à partir d'un calcul d'une longueur du câble entre le véhicule et une position de référence.

L'étape initiale peut être effectuée lorsque le véhicule est positionné dans une zone de départ dans laquelle des passagers ne peuvent pas embarquer dans le véhicule.

Le procédé peut comprendre une étape de détermination, à partir de l'image représentative, d'un nombre de passagers présents dans l'enceinte du véhicule.

Chaque passager peut comporter un élément muni d'une étiquette d'identification par radiofréquence émettant une information caractéristique du passager, et l'étape de détermination comporte en outre une récupération des informations caractéristiques des passagers embarqués dans le véhicule.

L'identifiant du véhicule peut être situé sur l'enceinte du véhicule, l'image représentative est générée à partir d'un appareil d'acquisition d'images, et l'étape de récupération de l'identifiant du véhicule comporte une reconnaissance, à partir de l'image représentative, de l'identifiant du véhicule.

Selon un autre aspect de l'invention, il est proposé une Installation de transport de véhicules tractés par un câble, comprenant un appareil d'acquisition d'images générant une image représentative d'une enceinte d'un véhicule.

L'installation comprend :
- des moyens d'acquisition configurés pour récupérer un identifiant du véhicule, et
- une unité de commande électronique enregistrant, dans une mémoire non volatile, l'identifiant et l'image représentative associée à l'identifiant.

L'installation peut comprendre deux gares, le câble définissant une voie de circulation des véhicules reliant les deux gares, et des moyens de localisation configurés pour identifier une position du véhicule le long de la voie de circulation.

Les moyens de localisation peuvent identifier la position du véhicule à partir d'un calcul d'une longueur du câble entre le véhicule et une position de référence.

L'installation peut comprendre une zone de départ dans laquelle des passagers ne peuvent pas embarquer dans les véhicules, l'appareil d'acquisition d'images étant agencé pour générer l'image représentative de l'enceinte du véhicule lorsque le véhicule est positionné dans la zone de départ.

L'unité de commande électronique peut être configurée pour déterminer, à partir de l'image représentative, un nombre de passagers présents dans l'enceinte du véhicule.

L'appareil d'acquisition d'images peut être une caméra vidéo ou une caméra thermique infrarouge.

Chaque passager peut comporter un élément muni d'une étiquette d'identification par radiofréquence émettant une information caractéristique du passager, et l'installation comporte un appareil radiofréquence agencé pour récupérer les informations caractéristiques des passagers embarqués dans le véhicule et pour les transmettre à l'unité de commande électronique configurée en outre pour déterminer, à partir des informations récupérées, le nombre de passagers présents dans l'enceinte du véhicule.

L'identifiant du véhicule peut être situé sur l'enceinte du véhicule, l'appareil d'acquisition d'images est une caméra vidéo et les moyens d'acquisition sont configurés pour récupérer l'identifiant du véhicule à partir de l'image représentative.

### Description sommaire du dessin

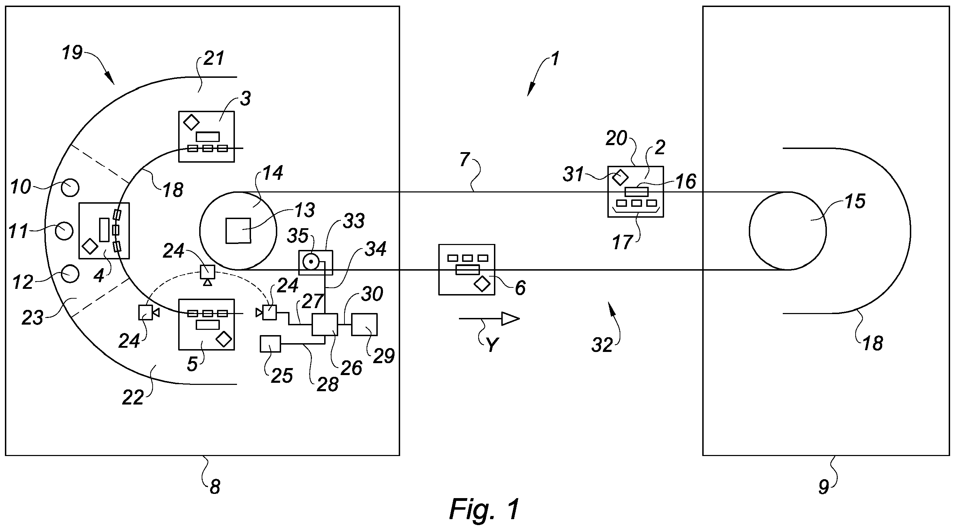

D'autres avantages et caractéristiques ressortiront plus clairement de la description qui va suivre de modes particuliers de réalisation et de mise en œuvre de l'invention donnés à titre d'exemples non limitatifs et représentés au dessin annexé, dans lequel : la figure 1, illustre schématiquement un mode de réalisation d'une installation de transport de véhicules tractés par un câble.

### Description détaillée

Sur la figure 1, on a représenté un mode de réalisation d'une installation 1 de transport de véhicules 2 à 6 tractés par un câble 7. L'installation 1 peut comprendre un unique véhicule ou plusieurs véhicules 2 à 6. L'installation 1 peut être de tout type, par exemple du type monocâble ou bicâble, à attaches fixes ou débrayables, à défilement continu ou va et vient. Une installation monocâble comporte un seul câble qui est à la fois porteur et tracteur, une installation bicâble comporte au moins un câble tracteur et au moins un câble porteur. Une installation à attaches fixes comprend des véhicules qui sont accrochés de manière permanente au câble tracteur, une installation à attaches débrayables comporte des véhicules accrochés de manière amovible au câble tracteur. Une installation à défilement continu comporte un câble tracteur qui décrit une boucle fermée entre deux gares d'extrémité de l'installation et les véhicules circulent en continu le long du câble de traction. Une installation à défilement va et vient comporte un câble tracteur qui décrit également une boucle fermée entre deux gares d'extrémité et un véhicule qui effectue un aller-retour entre les deux gares d'extrémité selon une même voie. Par ailleurs, le câble tracteur peut être aérien ou terrestre. Lorsque le câble tracteur est aérien, le câble est situé au-dessus du sol et les véhicules sont accrochés au câble et maintenus au-dessus du sol, on dit alors que l'installation 1 de transport est un téléphérique. De préférence les véhicules 2 à 6 sont adaptés pour transporter des personnes. Un téléphérique peut être un télésiège, et les véhicules sont des sièges, une télécabine, et les véhicules sont des cabines fermées, ou un téléporté mixte et l'installation comporte à la fois des cabines fermées et des sièges. Lorsque le câble tracteur est terrestre, le câble est situé au niveau du sol et les véhicules sont, soit supportés par des rails ou des câbles porteurs situés au niveau du sol et l'installation de transport est un funiculaire, soit les véhicules sont guidés par des glissières situées au niveau du sol et l'installation de transport est un train sur coussin d'air.

Sur la figure 1, on a représenté une installation 1 du type télécabine monocâble à attaches débrayables et à défilement continu. L'installation 1 comporte deux gares d'extrémité 8, 9 pour le débarquement/embarquement de passagers 10 à 12 dans les véhicules 2 à 6. En outre, l'installation 1 comporte une gare motrice 8 munie d'un moteur 13 pour faire tourner une poulie motrice 14 et entraîner le câble tracteur 7 selon un sens de déplacement Y. La deuxième gare d'extrémité 9, appelée gare de renvoi, comporte une poulie de renvoi 15 permettant de mettre le câble tracteur 7 sous tension entre les deux gares d'extrémité 8, 9.

Les véhicules 2 à 6 comportent une attache 16 pour les accrocher au câble tracteur 7. L'attache 16 peut être fixe, et dans ce cas les véhicules 2 à 6 sont accrochés de manière permanente au câble 7. L'attache 16 peut être débrayable, et dans ce cas les véhicules 2 à 6 sont accrochés de manière amovible au câble 7. Lorsque les attaches 16 sont débrayables, les véhicules 2 à 6 comportent des roues latérales 17 destinées à rouler sur des circuits de contournement 18 de manière à déplacer les véhicules 2 à 6 à une vitesse inférieure à celle du câble tracteur 7 pour faciliter l'embarquement/débarquement des passagers 10 à 12 dans les véhicules 2 à 6. En effet, lorsque les véhicules 2 à 6 sont décrochés du câble tracteur 7, ils circulent dans les gares 8, 9 avec une vitesse réduite par rapport à celle du câble tracteur 7. Afin de déplacer les véhicules 2 à 6 sur le circuit de contournement 18, les véhicules 2 à 6 peuvent être équipés d'une plaque, non représentée à des fins de simplification, sur laquelle appuie des galets rotatifs, appelés également pneumatiques, qui poussent les véhicules 2 à 6 pour les déplacer le long du circuit de contournement 18. Lorsque les attaches 16 des véhicules 2 à 6 sont fixes, le déplacement des véhicules 2 à 6 dans les gares d'extrémité 8, 9 est effectué par l'intermédiaire du câble tracteur 7 sur lequel les véhicules 2 à 6 sont accrochés.

L'installation 1 comporte un quai d'embarquement 19 où les passagers 10 à 12 attendent avant d'embarquer dans les véhicules 2 à 6. Les véhicules 2 à 6 comportent une enceinte 20 destinée à recevoir un ou plusieurs passagers 10 à 12. L'enceinte 20 peut comporter des assises pour asseoir les passagers 10 à 12, ou tout simplement une plateforme et les passagers embarquent dans les véhicules 2 à 6 en position debout. Par exemple, l'enceinte 20 est une cabine fermée et l'installation 1 est une télécabine. L'enceinte 20 peut être un siège ayant une ou plusieurs assises, et l'installation 1 est un télésiège ou un téléporté mixte.

Le quai d'embarquement 19 comporte une zone d'arrivée 21 des véhicules 2 à 6, une zone de départ 22 des véhicules 2 à 6, et une zone d'embarquement 23 située entre les deux zones 21, 22. La zone d'embarquement 23 correspond à une zone dans laquelle les passagers 10 à 12 attendent qu'un véhicule 4 circule dans la zone d'embarquement 23 pour embarquer dans le véhicule 4. Lorsqu'un véhicule 5 circule dans la zone de départ 22, aucun passager ne peut plus embarquer dans le véhicule 5.

L'installation 1 comporte en outre, un appareil d'acquisition d'images 24, des moyens d'acquisition 25, et une unité de commande électronique 26 connectée à l'appareil d'acquisition d'images 24 et aux moyens d'acquisition 25, par des connexions respectives 27, 28. L'installation 1 comporte également une mémoire non volatile 29 qui peut être connectée à l'unité de commande électronique 26, par une connexion 30, ou être intégrée au sein de l'unité de commande électronique 26. Par ailleurs, au moins un véhicule 2 à 6 comporte un identifiant 31. L'identifiant 31 est un élément qui comporte une information caractérisant le véhicule 2 à 6 et qui permet de différencier le véhicule d'un autre véhicule de l'installation 1. En outre, l'unité de commande électronique 26 est un ensemble de circuits logiques, par exemple un microprocesseur ou un ensemble de microprocesseurs. L'unité de commande électronique 26 peut être embarquée dans un ordinateur ou un automate programmable.

De manière générale, l'appareil d'acquisition d'images 24 génère une image représentative d'une enceinte 20 d'un véhicule 2 à 6. L'appareil d'acquisition d'images 24 peut également générer plusieurs images distinctes de l'enceinte 20. L'appareil 24 peut être monté fixe sur un support d'une gare 8, 9 de l'installation 1. L'installation 1 peut comprendre plusieurs appareils situés respectivement à plusieurs endroits d'une gare 8, 9, pour générer différentes images représentatives d'une même enceinte 20 de véhicules 2 à 6, avec des angles de prise de vue différents. En variante, on peut prévoir un appareil d'acquisition d'images 24 monté mobile pour prendre plusieurs images sous différents angles de prise de vue. Par exemple, l'appareil 24 peut se déplacer, comme représenté en pointillés sur la figure 1, depuis une position de référence où il génère une première image d'une face avant de l'enceinte 20, puis occuper une position latérale où il génère une deuxième image de la face latérale de l'enceinte 20, puis une position arrière où il génère une troisième image de la face arrière de l'enceinte 20. De façon générale, l'image représentative de l'enceinte 20 d'un véhicule 2 à 6 permet de récupérer les informations concernant le nombre de passagers présents dans le véhicule 2 à 6, et certaines caractéristiques des passagers, comme par exemple leur nature, si ce sont des enfants ou des adultes.

Plus particulièrement, l'appareil d'acquisition d'images 24 est un appareil numérique configuré pour générer des images numériques. De manière générale, l'appareil 24 comporte un capteur optique et des moyens d'élaboration d'images. Le capteur optique est un dispositif photosensible apte à convertir un rayonnement électromagnétique, du type visible ou infrarouge, en données numériques qu'il transmet aux moyens d'élaboration d'images. Les moyens d'élaboration d'images génèrent une image numérique à partir des données numériques reçues. Ces moyens d'élaboration peuvent être intégrés au sein du capteur optique, on appelle alors ces capteurs optiques des caméras optiques. Lorsque le capteur optique convertit un rayonnement électromagnétique infrarouge en image numérique, on dit que la caméra optique est une caméra thermique infrarouge. Lorsqu'elle comporte un capteur optique qui convertit un rayonnement électromagnétique visible en image numérique, on dit que la caméra est une caméra vidéo. Les moyens d'élaboration peuvent également être déportés, par exemple au sein de l'unité de commande électronique 26. Par ailleurs, le capteur optique peut être bidimensionnel ou tridimensionnel pour élaborer des données numériques permettant de générer respectivement des images bidimensionnelles ou tridimensionnelles.

Les moyens d'acquisition 25 sont configurés pour récupérer l'identifiant 31 d'un véhicule 2 à 6. En d'autres termes, les moyens d'acquisition 25 récupèrent l'information caractérisant le véhicule 2 à 6. L'unité de commande électronique 26 reçoit l'image représentative, ou les images représentatives, de l'enceinte 20 du véhicule 2 à 6, et l'identifiant 31 récupéré. Puis, l'unité de commande électronique 26 enregistre ces informations dans la mémoire non volatile 29. Plus particulièrement, l'unité de commande électronique 26 associe l'image représentative, ou l'ensemble d'images représentatives, de l'enceinte 20 d'un véhicule 2 à 6 à l'identifiant 31 du véhicule 2 à 6 récupéré. L'association peut être réalisée en créant un fichier numérique correspondant à l'image représentative et en incluant l'identifiant 31 au sein du fichier créé. En variante, l'unité de commande électronique 26 enregistre un lien dans la mémoire non volatile 29, le lien permettant de coupler l'image représentative de l'enceinte 20 du véhicule 2 à 6 avec l'identifiant 31 du véhicule 2 à 6. En d'autres termes, l'unité de commande électronique 26 enregistre, dans la mémoire 29, l'image représentative d'un véhicule 2 à 6 associée à l'identifiant 31 du véhicule. Cette association permet de récupérer l'image représentative d'un véhicule 2 à 6 à partir de la récupération de l'identifiant 31 du véhicule 2 à 6 dans la mémoire non volatile 29. On peut alors connaître le nombre et le type de passagers embarqués dans le véhicule 2 à 6. En récupérant tous les identifiants 31 enregistrés et leurs images représentatives associées, on peut connaître l'état de la voie de circulation 32. La voie de circulation 32 est définie par le câble tracteur 7 et correspond à la zone où circulent les véhicules 2 à 6.

Plus particulièrement, pour chaque véhicule 2 à 6 circulant au sein d'une zone spécifique de la voie de circulation 32, l'appareil d'acquisition d'images 24 génère une image représentative d'une enceinte du véhicule 2 à 6 et les moyens d'acquisition récupèrent l'identifiant 31 du véhicule 2 à 6. Par ailleurs, pour chaque véhicule circulant au sein de la zone spécifique, l'unité de commande électronique 26 enregistre l'identifiant 31 du véhicule 2 à 6 et l'image représentative de l'enceinte 20 du véhicule 2 à 6 associée à l'identifiant 31. Cette zone spécifique peut être située au niveau d'un pylône de la voie de circulation 32 placé entre les gares 8, 9. De préférence, la zone spécifique correspond à la zone de départ 22.

L'identifiant 31 peut être une marque fixée sur le véhicule 2 à 6, par exemple un numéro, un nom, ou une combinaison de chiffres et de lettres. Dans ce cas, l'appareil d'acquisition d'images 24 peut être une caméra vidéo bidimensionnelle ou tridimensionnelle, et les moyens d'acquisition sont embarqués au sein de l'unité de commande électronique 26 ou au sein de la caméra vidéo 24. Les moyens d'acquisition 25 sont alors configurés pour récupérer l'identifiant 31 du véhicule 2 à 6 à partir de l'image représentative générée. Par exemple, les moyens d'acquisition 25 sont équipés d'une application logicielle qui utilise des algorithmes de calculs pour reconnaître, au sein de l'image représentative, l'identifiant 31 inscrit sur le véhicule 2 à 6.

En variante, l'identifiant 31 peut être une étiquette d'identification par radiofréquence configurée pour recevoir un signal émis par un appareil radiofréquence, et pour émettre un signal contenant l'information caractérisant le véhicule 2 à 6, vers l'appareil radiofréquence. Dans ce cas, les moyens d'acquisition 25 comportent un appareil radiofréquence configuré pour traiter le signal émis par l'étiquette 31 et pour récupérer l'information caractérisant le véhicule 2 à 6.

Afin d'améliorer la précision de la connaissance de l'état de la voie de circulation 32, l'installation 1 peut en outre comprendre des moyens de localisation 33 configurés pour identifier des positions respectives des véhicules 2 à 6. Les moyens de localisation 33 sont connectés à l'unité de commande électronique 26 par une connexion 34. Les positions des véhicules 2 à 6 identifiées peuvent être enregistrées, par l'intermédiaire de l'unité de commande électronique 26, périodiquement dans la mémoire non volatile 29. Avantageusement, la position enregistrée d'un véhicule 2 à 6 est également associée à l'identifiant 31 du véhicule 2 à 6. Ainsi, lorsqu'on récupère l'identifiant 31 du véhicule 2 à 6, on peut connaître sa position sur la voie 32, et le contenu du véhicule 2 à 6.

Par exemple, les moyens de localisation 33 comprennent une roue codeuse 35 placée en contact avec le câble tracteur 7, et connectée à l'unité de commande électronique 26 par la connexion 34. La roue codeuse 35 permet de mesurer sa rotation pour en déduire une longueur du câble tracteur 7 qui a défilée par rapport à une position de référence. Par exemple, la position de référence peut être la position de la roue codeuse 35 dans la gare 8, 9. L'unité de commande électronique 26 récupère la longueur courante du câble tracteur 7 qui a défilée. En outre, lorsqu'un véhicule 2 à 6 passe dans une zone spécifique de l'installation 1, par exemple la zone de départ 22, l'unité de commande électronique 26 enregistre la longueur du câble courante et met à jour les longueurs de câble associées respectivement au véhicules 2 à 6 circulant le long de la voie. La mise à jour consiste à remplacer la longueur de câble associée à un véhicule, par la valeur courante de la longueur du câble à laquelle on retranche la valeur précédente de la longueur de câble associée au véhicule. Dans ce cas, on peut connaître à tout instant la position d'un véhicule 2 à 6 par rapport à la position de référence. On précise donc la connaissance de l'état de la voie de circulation 32 pour améliorer l'optimisation des moyens de secours à mettre en œuvre dans le cas éventuel d'une panne de l'installation 1.

En variante, les moyens de localisation 19 comportent un système de positionnement global, ou « global positionning system » en langue anglaise, configuré pour identifier les positions respectives des véhicules 2 à 6 à partir de signaux émis pas les véhicules 2 à 6. En outre, chaque véhicule 2 à 6 comporte un émetteur radiofréquence apte à émettre des signaux qui contiennent au moins l'information de la position du véhicule 2 à 6 sur la voie de circulation 32. L'émetteur radiofréquence d'un véhicule 2 à 6 récupère la position du véhicule 2 à 6 à partir d'une communication avec un groupe de satellites. Chaque véhicule 2 à 6 comporte également une unité de stockage d'énergie reliée à l'émetteur radiofréquence.

Plus particulièrement, la caméra numérique 24 est agencée pour générer une image représentative d'un véhicule 2 à 6, lorsque le véhicule est positionné dans la zone de départ 22. A cet effet, la caméra 24 est placée dans la zone de départ 22. On garantit ainsi que le contenu du véhicule 2 à 6 est définitif car aucun passager ne peut plus embarquer dans le véhicule 2 à 6. On fournit un moyen simple et efficace pour déterminer le taux de remplissage d'un véhicule. En effet, il est difficile de connaître le taux de remplissage d'un véhicule circulant en gare 8, et plus particulièrement dans la zone d'embarquement 23, car les passagers 10 à 12 peuvent entrer et sortir du véhicule, ou attendre sur le quai 19 sans embarquer dans un véhicule. En outre, on s'affranchit d'équiper les véhicules 2 à 6 de systèmes encombrant de détection, et consommateurs en énergie, car les véhicules ne sont généralement pas équipés d'unité de stockage d'énergie.

Avantageusement, l'unité de commande électronique 26 est configurée pour déterminer un nombre de passagers présents dans l'enceinte 20 du véhicule 2 à 6 dont l'identifiant 31 a été récupéré. Ainsi, on peut déterminer de manière automatisée le nombre de passagers qui ont embarqués dans un véhicule 2 à 6. De manière générale, l'unité de commande électronique 26 comporte une application logicielle qui utilise des algorithmes de calculs pour reconnaître, au sein de l'image représentative, les passagers présents dans le véhicule 2 à 6.

Lorsque l'appareil d'acquisition d'images 24 est une caméra vidéo, l'application logicielle comporte des algorithmes de calculs pour reconnaître les formes caractéristiques des passagers présents dans l'image représentative afin de différencier les passagers embarqués dans le véhicule. Lorsque l'appareil d'acquisition d'images 24 est une caméra thermique infrarouge, l'application logicielle comporte des algorithmes de calculs pour reconnaître les zones caractéristiques des passagers présents dans l'image représentative afin de différencier les passagers embarqués dans le véhicule. Ainsi, quel que soit le type de caméra utilisé, l'unité de commande électronique 26 peut compter les passagers présents dans l'enceinte 20 du véhicule 2 à 6.

On peut également envisager un autre mode de détermination du nombre de passagers embarqués dans un véhicule. Par exemple, chaque passager 10 à 12 comporte un élément muni d'une étiquette d'identification par radiofréquence émettant une information caractéristique du passager, et les moyens d'acquisition 25 comportent un appareil radiofréquence agencé pour récupérer les informations caractéristiques des passagers embarqués dans le véhicule. En outre, l'appareil radiofréquence 25 transmet, ces informations par la connexion 28, à l'unité de commande électronique 26. L'unité de commande électronique est en outre configurée pour déterminer, à partir des informations récupérées, le nombre de passagers présents dans l'enceinte 20 du véhicule 2 à 6. L'unité de commande électronique 26 peut comparer le nombre de passagers présents dans l'enceinte 20 déterminé à partir de l'image représentative avec le nombre déterminé à partir des informations récupérées par l'appareil radiofréquence, pour estimer de manière robuste le nombre de passagers effectivement présents dans le véhicule. On améliore ainsi la détermination du taux de remplissage du véhicule.

Un procédé de transport de véhicules tractés par un câble 7 peut être mis en œuvre par l'installation 1 qui vient d'être décrite ci-avant. Le procédé comprend les étapes principales suivantes :
- générer une image représentative d'une enceinte 20 d'un véhicule 2 à 6,
- récupérer un identifiant 31 du véhicule 2 à 6, et
- enregistrer, dans une mémoire non volatile 29, l'identifiant 31 et l'image représentative associée à l'identifiant 31.

L'invention qui vient d'être décrite est particulièrement adaptée pour tout type de téléphérique ou funiculaire.

## Revendications

1. Procédé de transport de véhicules (2 à 6) tractés par un câble (7), comprenant une étape initiale dans laquelle on génère une image représentative d'une enceinte (20) d'un véhicule (2 à 6), **caractérisé en ce qu'**il comprend les étapes suivantes :
- récupérer un identifiant (31) du véhicule (2 à 6), et
- enregistrer, dans une mémoire non volatile (29), l'identifiant (31) et l'image représentative associée à l'identifiant (31).

2. Procédé selon la revendication 1, dans laquelle le câble (7) définit une voie de circulation (32) des véhicules (2 à 6) reliant deux gares (8, 9) et le procédé comprend une étape d'identification d'une position du véhicule (2 à 6) le long de la voie de circulation (32).

3. Procédé selon la revendication 2, dans lequel on identifie la position du véhicule (2 à 6) à partir d'un calcul d'une longueur du câble (7) entre le véhicule (2 à 6) et une position de référence.

4. Procédé selon l'une des revendications 1 à 3, dans lequel l'étape initiale est effectuée lorsque le véhicule (2 à 6) est positionné dans une zone de départ (22) dans laquelle des passagers ne peuvent pas embarquer dans le véhicule (2 à 6).

5. Procédé selon l'une des revendications 1 à 4, comprenant une étape de détermination, à partir de l'image représentative, d'un nombre de passagers présents dans l'enceinte (20) du véhicule (2 à 6).

6. Procédé selon la revendication 5, dans lequel chaque passager (10 à 11) comporte un élément muni d'une étiquette d'identification par radiofréquence émettant une information caractéristique du passager (10 à 11), et l'étape de détermination comporte en outre une récupération des informations caractéristiques des passagers embarqués dans le véhicule (2 à 6).

7. Procédé selon l'une des revendications 1 à 6, dans lequel l'identifiant (31) du véhicule (2 à 6) est situé sur l'enceinte (20) du véhicule (2 à 6), l'image représentative est générée à partir d'un appareil d'acquisition d'images (24), et l'étape de récupération de l'identifiant (31) du véhicule (2 à 6) comporte une reconnaissance, à partir de l'image représentative, de l'identifiant (31) du véhicule (2 à 6).

8. Installation de transport de véhicules (2 à 6) tractés par un câble (7), comprenant un appareil d'acquisition d'images (24) générant une image représentative d'une enceinte (20) d'un véhicule (2 à 6), **caractérisée en ce qu'**elle comprend :
- des moyens d'acquisition (25) configurés pour récupérer un identifiant (31) du véhicule (2 à 6), et
- une unité de commande électronique (26) enregistrant, dans une mémoire non volatile (29), l'identifiant (31) et l'image représentative associée à l'identifiant (31).

9. Installation selon la revendication 8, comprenant deux gares (8, 9), le câble (7) définissant une voie de circulation (32) des véhicules (2 à 6) reliant les deux gares (8, 9), et des moyens de localisation (33) configurés pour identifier une position du véhicule (2 à 6) le long de la voie de circulation (32).

10. Installation selon la revendication 9, dans laquelle les moyens de localisation (33) identifient la position du véhicule (2 à 6) à partir d'un calcul d'une longueur du câble (7) entre le véhicule (2 à 6) et une position de référence.

11. Installation selon l'une des revendications 8 à 10, comprenant une zone de départ (22) dans laquelle des passagers ne peuvent pas embarquer dans les véhicules (2 à 6), l'appareil d'acquisition d'images (24) étant agencé pour générer l'image représentative de l'enceinte (20) du véhicule (2 à 6) lorsque le véhicule (2 à 6) est positionné dans la zone de départ (22).

12. Installation selon la revendication 11, dans laquelle l'unité de commande électronique (26) est configurée pour déterminer, à partir de l'image représentative, un nombre de passagers présents dans l'enceinte (20) du véhicule (2 à 6).

13. Installation selon l'une des revendications 8 à 12, dans laquelle l'appareil d'acquisition d'images (24) est une caméra vidéo ou une caméra thermique infrarouge.

14. Installation selon l'une des revendications 8 à 13, dans laquelle chaque passager (10 à 12) comporte un élément muni d'une étiquette d'identification par radiofréquence émettant une information caractéristique du passager (10 à 12), les moyens d'acquisition (25) comportant un appareil radiofréquence agencé pour récupérer les informations caractéristiques des passagers embarqués dans le véhicule (2 à 6) et pour les transmettre à l'unité de commande électronique (26) configurée en outre pour déterminer, à partir des informations récupérées, le nombre de passagers présents dans l'enceinte (20) du véhicule (2 à 6).

15. Installation selon l'une des revendications 8 à 12, dans laquelle l'identifiant (31) du véhicule (2 à 6) est situé sur l'enceinte (20) du véhicule (2 à 6), l'appareil d'acquisition d'images (24) est une caméra vidéo et les moyens d'acquisition (25) sont configurés pour récupérer l'identifiant (31) du véhicule (2 à 6) à partir de l'image représentative.

## Patentansprüche

1. Verfahren zur Beförderung von Fahrzeugen (2 bis 6), die durch ein Seil (7) gezogen werden, umfassend einen anfänglichen Schritt, in dem ein Bild erzeugt wird, das repräsentativ für ein Gehäuse (20) eines Fahrzeugs (2 bis 6) ist, **dadurch gekennzeichnet, dass** es die folgenden Schritte umfasst:
- Abfragen eines Identifikators (31) des Fahrzeugs (2 bis 6), und
- Speichern, in einem nichtflüchtigen Speicher (29), des Identifikators (31) und des repräsentativen Bildes, das dem Identifikator (31) zugeordnet ist.

2. Verfahren nach Anspruch 1, wobei das Seil (7) eine Umlaufstrecke (32) für die Fahrzeuge (2 bis 6) definiert, die zwei Stationen (8, 9) miteinander verbindet, und wobei das Verfahren einen Schritt des Identifizierens einer Position des Fahrzeugs (2 bis 6) entlang der Umlaufstrecke (32) umfasst.

3. Verfahren nach Anspruch 2, wobei die Position des Fahrzeugs (2 bis 6) ausgehend von einer Berechnung einer Länge des Seils (7) zwischen dem Fahrzeug (2 bis 6) und einer Referenzposition identifiziert wird.

4. Verfahren nach einem der Ansprüche 1 bis 3, wobei der anfängliche Schritt ausgeführt wird, wenn das Fahrzeug (2 bis 6) in einem Abfahrtsbereich (22) positioniert ist, in dem Passagiere das Fahrzeug (2 bis 6) nicht besteigen können.

5. Verfahren nach einem der Ansprüche 1 bis 4, umfassend einen Schritt des Bestimmens, ausgehend von dem repräsentativen Bild, einer Anzahl an Passagieren, die in dem Gehäuse (20) des Fahrzeugs (2 bis 6) anwesend sind.

6. Verfahren nach Anspruch 5, wobei jeder Passagier (10 bis 11) ein Element mit sich trägt, das mit einem Radiofrequenz-Identifikationsetikett versehen ist, das eine Information aussendet, die kennzeichnend für den Passagier (10 bis 11) ist, und wobei der Schritt des Bestimmens darüber hinaus eine Abfrage der Informationen beinhaltet, die kennzeichnend für die Passagiere sind, die das Fahrzeug (2 bis 6) bestiegen haben.

7. Verfahren nach einem der Ansprüche 1 bis 6, wobei sich der Identifikator (31) des Fahrzeugs (2 bis 6) an dem Gehäuse (20) des Fahrzeugs (2 bis 6) befindet, wobei das repräsentative Bild ausgehend von einer Bilderfassungsvorrichtung (24) erzeugt wird und wobei der Schritt des Abfragens des Identifikators (31) des Fahrzeugs (2 bis 6) ein Erkennen des Identifikators (31) des Fahrzeugs (2 bis 6) ausgehend von dem repräsentativen Bild beinhaltet.

8. Anlage zur Beförderung von Fahrzeugen (2 bis 6), die durch ein Seil (7) gezogen werden, umfassend eine Bilderfassungsvorrichtung (24), die ein Bild erzeugt, das repräsentativ für ein Gehäuse (20) eines Fahrzeugs (2 bis 6) ist, **dadurch gekennzeichnet, dass** sie Folgendes umfasst:
- Erfassungsmittel (25), die dafür ausgelegt sind, einen Identifikator (31) des Fahrzeugs (2 bis 6) abzufragen, und
- eine elektronische Steuereinheit (26), die den Identifikator (31) und das dem Identifikator (31) zugeordnete repräsentative Bild in einem nichtflüchtigen Speicher (29) speichert.

9. Anlage nach Anspruch 8, umfassend zwei Stationen (8, 9), wobei das Seil (7) eine Umlaufstrecke (32) für die Fahrzeuge (2 bis 6) definiert, welche die zwei Stationen (8, 9) miteinander verbindet, und Lokalisierungsmittel (33), die dafür ausgelegt sind, eine Position des Fahrzeugs (2 bis 6) entlang der Umlaufstrecke (32) zu identifizieren.

10. Anlage nach Anspruch 9, wobei die Lokalisierungsmittel (33) die Position des Fahrzeugs (2 bis 6) ausgehend von einer Berechnung einer Länge des Seils (7) zwischen dem Fahrzeug (2 bis 6) und einer Referenzposition identifizieren.

11. Anlage nach einem der Ansprüche 8 bis 10, umfassend einen Abfahrtsbereich (22), in dem Passagiere die Fahrzeuge (2 bis 6) nicht besteigen können, wobei die Bilderfassungsvorrichtung (24) dafür eingerichtet ist, das repräsentative Bild des Gehäuses (20) des Fahrzeugs (2 bis 6) zu erzeugen, wenn das Fahrzeug (2 bis 6) im Abfahrtsbereich (22) positioniert ist.

12. Anlage nach Anspruch 11, wobei die elektronische Steuereinheit (26) dafür ausgelegt ist, ausgehend von dem repräsentativen Bild eine Anzahl an Passagieren zu bestimmen, die in dem Gehäuse (20) des Fahrzeugs (2 bis 6) anwesend sind.

13. Anlage nach einem der Ansprüche 8 bis 12, wobei die Bilderfassungsvorrichtung (24) eine Videokamera oder eine Infrarot-Wärmebildkamera ist.

14. Anlage nach einem der Ansprüche 8 bis 13, wobei jeder Passagier (10 bis 12) ein Element mit sich trägt, das mit einem Radiofrequenz-Identifikationsetikett versehen ist, das eine Information aussendet, die kennzeichnend für den Passagier (10 bis 12) ist, wobei die Erfassungsmittel (25) eine Radiofrequenzvorrichtung beinhalten, die dafür eingerichtet ist, die Informationen abzufragen, die kennzeichnend für die Passagiere sind, die das Fahrzeug (2 bis 6) bestiegen haben, und sie an die elektronische Steuereinheit (26) zu übertragen, die ferner dafür ausgelegt ist, ausgehend von den abgefragten Informationen die Anzahl der Passagiere zu bestimmen, die in dem Gehäuse (20) des Fahrzeugs (2 bis 6) anwesend sind.

15. Anlage nach einem der Ansprüche 8 bis 12, wobei sich der Identifikator (31) des Fahrzeugs (2 bis 6) an dem Gehäuse (20) des Fahrzeugs (2 bis 6) befindet, wobei die Bilderfassungsvorrichtung (24) eine Videokamera ist und die Erfassungsmittel (25) dafür ausgelegt sind, den Identifikator (31) des Fahrzeugs (2 bis 6) ausgehend von dem repräsentativen Bild abzufragen.

## Claims

1. Method for transporting vehicles (2 to 6) hauled by a cable (7), comprising an initial step in which an image representative of a compartment (20) of a vehicle (2 to 6) is generated, **characterized in that** it comprises the following steps:
- retrieving an identifier (31) of the vehicle (2 to 6), and
- recording the identifier (31) and the representative image associated with the identifier (31) in a non-volatile memory (29).

2. Method according to claim 1, wherein the cable (7) defines a running line (32) of the vehicles (2 to 6) connecting two stations (8, 9) and the method comprises an identification step of a position of the vehicle (2 to 6) on the running line (32).

3. Method according to claim 2, wherein the position of the vehicle (2 to 6) is identified from a calculation of a length of the cable (7) between the vehicle (2 to 6) and a reference position.

4. Method according to one of claims 1 to 3, wherein the initial step is performed when the vehicle (2 to 6) is positioned in a departure area (22) in which passengers cannot board the vehicle (2 to 6).

5. Method according to one of claims 1 to 4, comprising a step of determining a number of passengers present in the compartment (20) of the vehicle (2 to 6).

6. Method according to claim 5, wherein each passenger (10 to 11) comprises an element provided with a radiofrequency identification tag emitting data characteristic of the passenger (10 to 11), and the determining step further comprises a retrieval of the data characteristic of the passengers aboard the vehicle (2 to 6).

7. Method according to one of claims 1 to 6, wherein the identifier (31) of the vehicle (2 to 6) is located on the compartment (20) of the vehicle (2 to 6), the representative image is generated from an image acquisition system (24), and the retrieval step of the identifier (31) of the vehicle (2 to 6) comprises a recognition of the identifier (31) of the vehicle (2 to 6) from the representative image.

8. Installation for transporting vehicles (2 to 6) hauled by a cable (7), comprising an image acquisition system (24) generating an image representative of a compartment (20) of a vehicle (2 to 6), **characterized in that** it comprises:
- acquisition means (25) configured to retrieve an identifier (31) of the vehicle (2 to 6), and
- an electronic control unit (26) recording the identifier (31) and the representative image associated with the identifier (31) in a non-volatile memory (29).

9. Installation according to claim 8, comprising two stations (8, 9), the cable (7) defining a running line (32) of the vehicles (2 to 6) connecting the two stations (8, 9), and locating means (33) configured to identify a position of the vehicle (2 to 6) on the running line (32).

10. Installation according to claim 9, wherein the locating means (33) identify the position of the vehicle (2 to 6) from a calculation of a length of the cable (7) between the vehicle (2 to 6) and a reference position.

11. Installation according to one of claims 8 to 10, comprising a departure area (22) in which passengers cannot board the vehicles (2 to 6), the image acquisition system (24) being arranged to generate the image representative of the compartment (20) of the vehicle (2 to 6) when the vehicle (2 to 6) is positioned in the departure area (22).

12. Installation according to claim 11, wherein the electronic control unit (26) is configured to determine a number of passengers present in the compartment (20) of the vehicle (2 to 6) from the representative image.

13. Installation according to one of claims 8 to 12, wherein the image acquisition system (24) is a video camera or an infrared thermal camera.

14. Installation according to one of claims 8 to 13, wherein each passenger (10 to 12) comprises an element provided with a radiofrequency identification tag emitting data characteristic of the passenger (10 to 12), the acquisition means (25) comprising a radiofrequency apparatus arranged to retrieve the data characteristic of the passengers aboard the vehicle (2 to 6) and to transmit them to the electronic control unit (26) further configured to determine the number of passengers present in the compartment (20) of the vehicle (2 to 6) from the retrieved data.

15. Installation according to one of claims 8 to 12, wherein the identifier (31) of the vehicle (2 to 6) is located on the compartment (20) of the vehicle (2 to 6), the image acquisition system (24) is a video camera and the acquisition means (25) are configured to retrieve the identifier (31) of the vehicle (2 to 6) from the representative image.
